# EUROPEAN PATENT APPLICATION

(11) **EP 3 982 592 A1**
(43) Date of publication of application: **13.04.2022**
(21) Application number: 20817750.1
(22) Date of filing: 29.05.2020
(51) Int. Cl.: H04L 9/32, G06F 21/31, G09C 1/00

(54) **IDENTITY VERIFICATION PROGRAM, IDENTITY VERIFICATION METHOD, USER TERMINAL, AND USER AUTHENTICATION PROGRAM**

(30) Priority: 05.06.2019 JP 2019105622
(71) Applicant: Sony Group Corporation, Tokyo 108-0075 (JP)
(72) Inventor: MARUYAMA, Shinya, Tokyo 108-0075 (JP); KAGEYAMA, Yuichi, Tokyo 108-0075 (JP)
(74) Representative: MFG Patentanwälte Meyer-Wildhagen Meggle-Freund Gerhard PartG mbB
(86) International application number: PCT/JP2020/021494
(87) International publication number: WO 2020/246402

(57) **Abstract**

An identity verification program causes a computer that is a user terminal (100) to execute a processing function for identity verification by a zero knowledge proof. The identity verification program acquires Witness that is information that only a user of the user terminal (100) is allowed to know. Such an identity verification program generates a proof for user authentication by zero knowledge proof based on the acquired Witness. The identity verification program transmits a user authentication request based on the generated proof to a cloud server (200).

## Description

### Field

The present disclosure relates to an identity verification program, an identity verification method, a user terminal, and a user authentication program.

### Background

Various online services such as cloud services are increasingly used, and various countermeasures that manage and protect user data, such as countermeasures against unauthorized access using a user ID and a password and countermeasures against leakage by encryption of user data, have been attempted.

### Citation List

### Patent Literature

Patent Literature 1: JP 2015-95877 A

### Summary

### Technical Problem

In providing various online services, in a countermeasure for protecting user data, it is required to achieve both protection of user privacy and improvement of user convenience.

Therefore, the present disclosure proposes an identity verification program, an identity verification method, a user terminal, and a user authentication program capable of achieving both protection of user privacy and improvement of user convenience. Solution to Problem

To solve the above problem, an identity verification program causing a computer, as a user terminal, to execute a processing function for identity verification by zero knowledge proof according to an embodiment of the present disclosure includes: acquiring Witness that is information that only a user of the user terminal is allowed to know; generating a proof for user authentication by zero knowledge proof based on the acquired Witness; and transmitting a user authentication request based on the generated proof to an authentication device.

### Brief Description of Drawings

FIG. 1 is a diagram illustrating an example of an information processing system according to the embodiment.
FIG. 2 is a diagram illustrating an outline of a setup process according to the embodiment.
FIG. 3 is a diagram illustrating an outline of a process of a user terminal according to the embodiment.
FIG. 4 is a diagram illustrating an example of a procedure of a user registration process according to the embodiment.
FIG. 5 is a diagram illustrating an example of a procedure of a user authentication process according to the embodiment.
FIG. 6 is a diagram illustrating an example of a procedure of a process of generating and storing a user secret key according to the embodiment.
FIG. 7 is a diagram illustrating another example of a procedure of a process of generating and storing a user secret key according to the embodiment.
FIG. 8 is a diagram illustrating an example of a procedure of a process of storing a public parameter according to a modification.
FIG. 9 is a diagram illustrating an example of a user interface for selecting an identity proof algorithm according to a modification.
FIG. 10 is a diagram illustrating another example of a procedure of a process of generating and storing a user secret key according to a modification.
FIG. 11 is a diagram illustrating an example of a procedure of a process of recovering a user secret key by a public parameter according to a modification.
FIG. 12 is a diagram illustrating an example of a procedure of a process of generating and storing a backup secret key according to a modification.
FIG. 13 is a diagram illustrating an example of a procedure of a process of recovering a user secret key by a backup secret key according to a modification.
FIG. 14 is a diagram illustrating an application example of a plurality of identity proof algorithms.
FIG. 15 is a hardware configuration diagram illustrating an example of a computer that implements functions of a user terminal. Description of Embodiments

Hereinafter, the embodiments of the present disclosure will be described in detail with reference to the drawings. In the following embodiments, the same parts are designated by the same reference numerals, so that duplicate description may be omitted.

Further, the present disclosure will be described in the following item order.
1. Introduction
2. Functional configuration example
3. Processing procedure example
4. Modification
5. Others
6. Effects
7. Hardware configuration

### (1. Introduction)

In providing various online services, service forms for managing and protecting user data are roughly divided into a centralized service form and a decentralized service form.

In the centralized service form, secret information of a user is managed by the service operator. For example, when login authentication using a user ID and a password is performed, a password or a secret catchword in a case where the password is forgotten is managed by the service operator. Therefore, it is possible to flexibly cope with the loss of the password. The service operator also manages information (decryption key) for decrypting the encrypted data of the user. Therefore, there is no risk of losing the information for decrypting the encrypted data, and the data availability is high. As described above, the centralized service form has high user convenience. On the other hand, since information (decryption key) for decrypting the encrypted data is managed by the service operator, an authorized administrator can decrypt the encrypted user data and look into the content. In addition, when using a service, user data may be provided to a third party, and it is desirable to avoid that encrypted data can be decrypted by the service operator as much as possible. As described above, in the centralized service form, there is a problem from the viewpoint of protecting user privacy. To cope with a user privacy problem, a decentralized service form is considered.

In the decentralized service form, the user manages information (user key) for decrypting encrypted data obtained by encrypting user data. Therefore, the service operator managing the encrypted data cannot decrypt the encrypted data, and only the user can decrypt the encrypted data, so that the user privacy can be protected. On the other hand, if the user loses the information (user key) for decrypting the encrypted data, the encrypted data cannot be restored and referred to, and the data availability is low. As described above, the decentralized service form has a problem in terms of user convenience.

In addition, there is a backup method in which a service operator encrypts and manages a user key used to encrypt user data. However, since the service operator can decrypt the user key, there is a problem in terms of user privacy. In addition, there is also a method in which the user backs up the user key offline, but it is necessary for the user to prepare a place where the user separately backs up the user key, and there is a problem in terms of user convenience. In addition, there is also a method in which the service operator backs up an encrypted user key encrypted with a password or the like by the user, but there is a problem in terms of user convenience since there is a risk of forgetting the password and the encrypted user key is managed by a standard method provided from the service operator such as a password.

For this reason, the present embodiment proposes an information processing device capable of achieving both protection of user privacy and improvement of user convenience.

### (2. Functional configuration example)

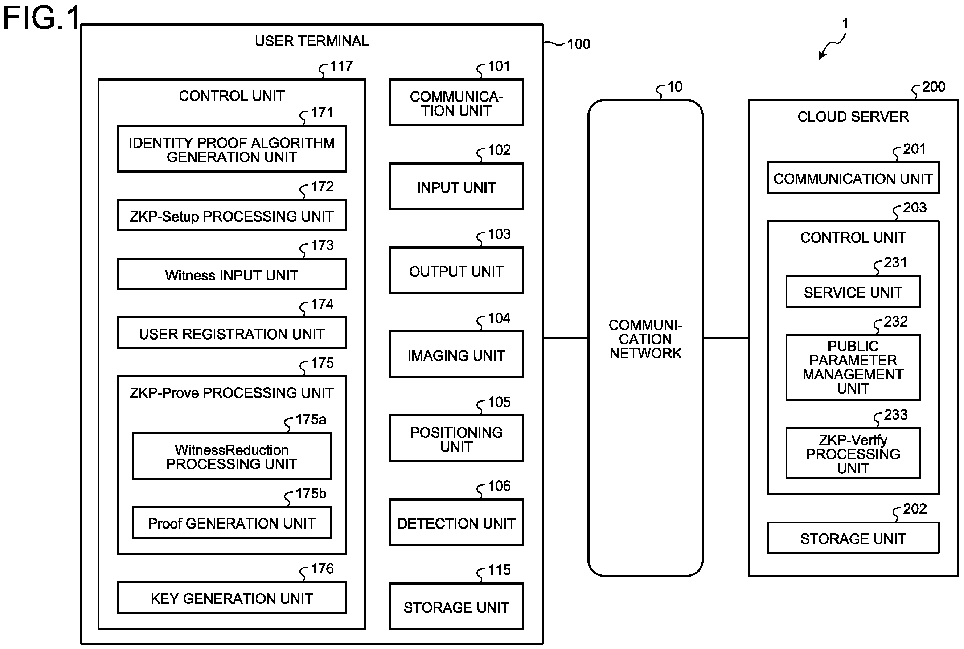

FIG. 1 is a diagram illustrating an example of an information processing system 1 according to the embodiment. As illustrated in FIG. 1, the information processing system 1 includes a user terminal 100 and a cloud server 200 capable of performing data communication with each other via a communication network 10.

The user terminal 100 is a user device used by a user who is a user of an online service provided by the cloud server 200. The user terminal 100 is realized by, for example, an information processing device such as a cellular phone including a smartphone, a tablet terminal, a desktop PC, a notebook PC, or a personal digital assistant (PDA).

The cloud server 200 is a device managed by a service operator that provides various online services to the user terminal 100 in a cloud environment. The cloud server 200 is an example of an authentication device that processes a user authentication request transmitted from the user terminal 100. The cloud server 200 illustrated in FIG. 1 may include a plurality of servers distributed for each processing according to the embodiment described below.

### [2-1. User terminal]

The user terminal 100 includes a communication unit 101, an input unit 102, an output unit 103, an imaging unit 104, a positioning unit 105, a detection unit 106, a storage unit 115, and a control unit 117.

The communication unit 101 is realized by, for example, a network interface card (NIC) or the like. The communication unit 101 is connected to the communication network 10 in a wired or wireless manner to transmit and receive information to and from the cloud server 200 and the like via the communication network 10. The communication network 10 includes a local area network (LAN), a wide area network (WAN), a telephone network (mobile telephone networks, fixed telephone networks, and the like), a regional internet protocol (IP) network, the Internet, and the like.

The input unit 102 includes a keyboard, a mouse, and the like, and receives various operations from the user of the user terminal 100. The operation accepted by the input unit 102 from the user terminal 100 includes a user registration operation, a login operation, and the like associated with the use of the service provided from the cloud server 200. The input unit 102 may include a sound input device such as a microphone, and receives an input of a user's voice or the like.

The output unit 103 includes a display, a speaker, and the like to output various types of information. The information output from the output unit 103 includes user registration provided from the cloud server 200, a user interface for service use, and the like.

The imaging unit 104 includes a device such as a camera and captures an image. The imaging unit 104 can acquire a face image, an iris image, and the like of the user as user data that can be handled by the identity proof algorithm.

The positioning unit 105 includes a global positioning system (GPS) or the like to acquire a position of the user terminal 100. The positioning unit 105 can acquire position information or the like of the user's home or his or her parent's home as user data that can be handled by the identity proof algorithm.

The detection unit 106 includes an acceleration sensor, a gyro sensor, a biological sensor, and the like, and detects various types of information acting on the user terminal 100. The detection unit 106 can acquire biometric information such as a feature amount corresponding to the gait of the user, a waveform of a heartbeat, and a feature point of a fingerprint as the user data that can be handled by the identity proof algorithm.

The storage unit 115 stores programs, data, and the like for realizing various processing functions executed by the control unit 117. For example, the storage unit 115 is realized by a semiconductor memory device such as a random access memory (RAM) and a flash memory, or a storage device such as a hard disk and an optical disk. The program stored in the storage unit 115 includes an identity verification program for implementing a processing function corresponding to each unit of the control unit 117. The identity verification program provides a function for causing the user terminal 100 to execute a processing function for identity verification by the zero knowledge proof described below.

The control unit 117 executes various processes in the user terminal 100. The control unit 117 is, for example, realized by a processor such as a central processing unit (CPU) or a micro processing unit (MPU). For example, the control unit 117 is realized by the processor executing various programs stored in the storage device inside the user terminal 100 with a random access memory (RAM) or the like as a work area. The control unit 107 may be realized by an integrated circuit such as an application specific integrated circuit (ASIC) or a field programmable gate array (FPGA).

The control unit 117 includes an identity proof algorithm generation unit 171, a ZKP-Setup processing unit 172, a Witness input unit 173, a user registration unit 174, a ZKP-Prove processing unit 175, and a key generation unit 176. The control unit 107 implements or executes functions and actions of various processes of the user terminal 100 described below by each unit. The functional configuration of the control unit 107 is not particularly limited to the configuration example illustrated in FIG. 1, and other configurations may be used as long as various processes of the user terminal 100 described later can be performed.

The identity proof algorithm generation unit 171 generates an identity proof algorithm that is a method of performing identity verification. The identity proof algorithm generation unit 171 is generated using Witness (hereinafter, it is described as "Witness"), which is information that only the user of the user terminal 100 is allowed to know, via the input unit 102. Examples of the identity proof algorithm include matching between a name and a password, matching between a name and a plurality of secret catchwords, positions of a name and a face image, matching between a name and a fingerprint, and the like.

Other examples of the data that can be handled as the identity proof algorithm include secret information such as a card number, a combination of known information, sensing data, a My Number (Social Security and Tax Number), and credit card information. Examples of the combination of known information include a family name, a home address or a telephone number, a parent's address or telephone number, and a parent's maiden name. Examples of the sensing data include, in addition to the above-described fingerprint, position information of a specific place such as home, and biometric information such as iris, face, and gait.

In the identity proof algorithm, conditional expressions such as perfect coincidence, ambiguity coincidence, magnitude comparison, and inclusion relationship can be appropriately employed according to the data exchanged in the identity proof algorithm. In the case of an identity proof algorithm that handles a password, a secret catchword, and biometric information, perfect coincidence can be employed as a conditional expression. In the case of an identity proof algorithm that handles biometric information and a secret catchword, ambiguity coincidence can be employed as a conditional expression. In the case of an identity proof algorithm that handles position information, for example, an inclusion relationship such as whether the position information is included in a specific area can be employed as the conditional expression. A combination of data and conditional expressions that are handled in the identity proof algorithm may be an AND condition or an OR condition.

The data of the identity proof algorithm may be interactively input via the input unit 102, the imaging unit 104, or the like, or may be non-interactively input.

The ZKP (Zero Knowledge Proof)-Setup processing unit 172 executes a setup process of generating a public parameter for user authentication by zero knowledge proof based on an identity proof algorithm. The ZKP-Setup processing unit 172 functions as a setup processing unit that executes a setup process of generating a public parameter for user authentication by the zero knowledge proof.

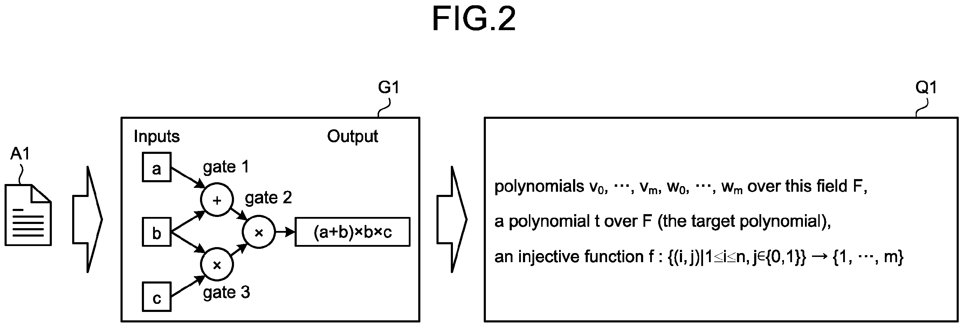

FIG. 2 is a diagram illustrating an outline of a setup process according to the embodiment. As illustrated in FIG. 2, the ZKP-Setup processing unit 172 converts an identity proof algorithm A1 into an NP complete class problem Q1 by inputting the identity proof algorithm A1 generated by the identity proof algorithm generation unit 171 to a logic gate G1.

The NP complete class problem Q1 cannot be solved in polynomial time unless Witness, which is information which has been used to generate the identity proof algorithm and that only the user is allowed to know, is known. As a result, integrity, soundness, and zero knowledge of identity verification using the identity proof algorithm are realized. The user of the user terminal 100 can be proved to be the user without disclosing Witness to the service operator.

The Witness input unit 173 receives an input of Witness of the user of the user terminal 100. The Witness input unit 173 functions as an acquisition unit that acquires Witness that is information that only the user of the user terminal 100 is allowed to know.

The user registration unit 174 registers the user information of the user terminal 100 in the cloud server 200. The user registration unit 174 acquires user identification information (user ID) unique to the user from the user of the user terminal 100 via the input unit 102. The user registration unit 174 registers the user identification information (user ID), the public parameter, and encrypted Witness in the cloud server 200 in association with one another. It is assumed that information that the user is unlikely to forget, such as an E-mail address, is used as the user identification information.

The ZKP-Prove processing unit 175 includes a WitnessReduction processing unit 175a and a Proof generation unit 175b. The ZKP-Prove processing unit 175 functions as a generation unit that generates a proof for user authentication by the zero knowledge proof based on Witness by each unit. The ZKP-Prove processing unit 175 also functions as a transmission unit that transmits a user authentication request using the proof to the cloud server 200.

The WitnessReduction processing unit 175a executes a WitnessRedution process of generating a secret polynomial h based on Witness, the public parameter, and encrypted Witness. The secret polynomial h (hereinafter, it is described as a polynomial h) generated by the WitnessRedution process is a polynomial that cannot be generated in polynomial time when Witness that is information that only the user is allowed to know is not present. That is, when Witness and encrypted Witness do not match, the correct polynomial h is not generated by the WitnessRedution process.

The Proof generation unit 175b generates a proof for user authentication by the zero knowledge proof based on the polynomial h generated by the WitnessRedution process. The Proof generation unit 175b generates, for example, a result of hashing the polynomial h as a proof. The Proof generation unit 175b transmits the generated proof to the cloud server 200.

The key generation unit 176 generates a user secret key for encrypting the user data of the user of the user terminal 100 using the polynomial h. In addition, the key generation unit 176 generates a backup secret key for encrypting the user secret key using the polynomial h.

### [2-2. Cloud server]

The cloud server 200 includes a communication unit 201, a storage unit 202, and a control unit 203.

The communication unit 201 is realized by, for example, a network interface card (NIC) or the like. The communication unit 201 is connected to the communication network 10 in a wired or wireless manner to transmit and receive information to and from the user terminal 100 and the like via the communication network 10.

The storage unit 202 stores programs, data, and the like for realizing various processing functions executed by the control unit 203. For example, the storage unit 202 is realized by a semiconductor memory device such as a random access memory (RAM) and a flash memory, or a storage device such as a hard disk and an optical disk. The program stored in the storage unit 202 includes a user authentication program for implementing a processing function corresponding to each unit of the control unit 203. The user authentication program provides a function for executing user authentication based on the proof for user authentication by the zero knowledge proof generated based on Witness and encrypted Witness obtained by encrypting Witness.

The control unit 203 executes various processes in the cloud server 200. The control unit 203 is, for example, realized by a processor such as a central processing unit (CPU) or a micro processing unit (MPU). For example, the control unit 203 is realized by the processor executing various programs stored in the storage device inside the cloud server 200 with a random access memory (RAM) or the like as a work area. The control unit 203 may be realized by an integrated circuit such as an application specific integrated circuit (ASIC) or a field programmable gate array (FPGA).

The control unit 203 includes a service unit 231, a public parameter management unit 232, and a ZKP-Verify processing unit 233, and these units implement or execute functions and actions of various processes of the cloud server 200 described below. The functional configuration of the control unit 203 is not particularly limited to the configuration example illustrated in FIG. 1, and other configurations may be used as long as various processes of the cloud server 200 described later can be performed.

The service unit 231 provides various online services for the user of the user terminal 100. When providing various online services, the service unit 231 receives user registration and a user authentication request from the user terminal 100.

The public parameter management unit 232 registers and manages a public parameter, user identification information (user ID), and encrypted Witness provided from the user terminal 100 in association with each other.

The ZKP-Verify processing unit 233 executes user authentication of the user of the user terminal 100 based on a proof included in the user authentication request received from the user terminal 100. The ZKP-Verify processing unit 233 acquires the public parameter and encrypted Witness associated with the user ID included in the user authentication request from the public parameter management unit 232. The ZKP-Verify processing unit 233 verifies the proof received from the user terminal 100 based on the public parameter and encrypted Witness. Whether the proof is generated by the user of the user terminal 100 is verified. The ZKP-Verify processing unit 233 matches the calculation result based on the public parameter and encrypted Witness with the proof, and verifies whether the proof is generated from the correct polynomial h.

In a case where that the proof is generated from the correct polynomial h can be proved, the ZKP-Verify processing unit 233 derives a verification result indicating that the user of the user terminal 100 that is the transmission source of the proof is the authentic user. The correct polynomial h means the polynomial is generated by the Witness same as the Witness used in the identity proof algorithm used at the time of generating the public parameter. On the other hand, in a case where that the proof is generated from the correct polynomial h cannot be proved, the ZKP-Verify processing unit 233 derives a verification result indicating that the user of the user terminal 100 that is the transmission source of the proof is not the authentic user.

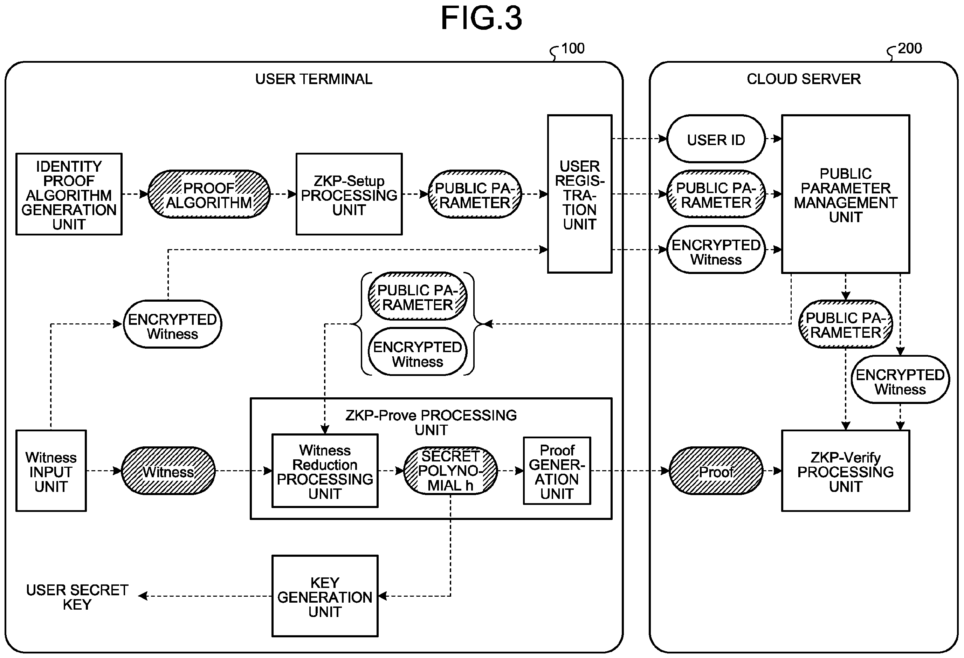

FIG. 3 is a diagram illustrating an outline of a process of the user terminal 100 according to the embodiment. As illustrated in FIG. 3, the identity proof algorithm generation unit 171 generates an identity proof algorithm. The ZKP-Setup processing unit 172 generates a public parameter for user authentication by the zero knowledge proof based on the identity proof algorithm based on the identity proof algorithm.

The Witness input unit 173 generates encrypted Witness obtained by encrypting Witness input in association with the user registration. The user registration unit 174 transmits the user ID, the public parameter, and encrypted Witness to the cloud server 200 in association with one another. In this way, the user terminal 100 completes the user registration process.

In addition, the Witness input unit 173 receives an input of Witness from the user according to the user authentication. The WitnessReduction processing unit 175a executes a WitnessRedution process of generating a secret polynomial h based on Witness, the public parameter, and encrypted Witness.

The Proof generation unit 175b generates a proof for user authentication by the zero knowledge proof based on the polynomial h generated by the WitnessRedution process. The Proof generation unit 175b generates, for example, a result of hashing the polynomial h as a proof. The user terminal 100 receives the user authentication process by the cloud server 200 by transmitting the proof generated by the Proof generation unit 175b to the cloud server 200.

In addition, the key generation unit 176 generates the user secret key using the polynomial h generated by the WitnessReduction processing unit 175a.

### (3. Processing procedure example)

### [3-1. User registration]

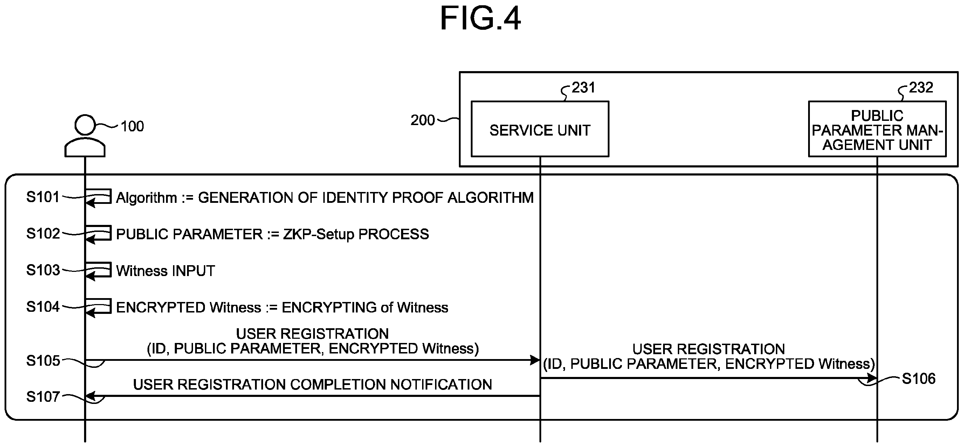

FIG. 4 is a diagram illustrating an example of a procedure of the user registration process according to the embodiment. As illustrated in FIG. 4, the identity proof algorithm generation unit 171 of the user terminal 100 generates an identity proof algorithm (Step S101).

The ZKP-Setup processing unit 172 of the user terminal 100 executes a setup process of generating a public parameter for user authentication by the zero knowledge proof based on the identity proof algorithm (Step S102).

The Witness input unit 173 of the user terminal 100 generates encrypted Witness obtained by encrypting the input Witness (Steps S103 and S104).

The user registration unit 174 of the user terminal 100 transmits the user ID, the public parameter, and encrypted Witness in association with each other to the cloud server 200 (Step S105).

The service unit 231 of the cloud server 200 requests the public parameter management unit 232 to register the user ID, the public parameter, and encrypted Witness received from the user terminal 100 (Step S106).

The service unit 231 transmits a user registration completion notification to the user terminal 100 (Step S107).

### [3-2. User authentication]

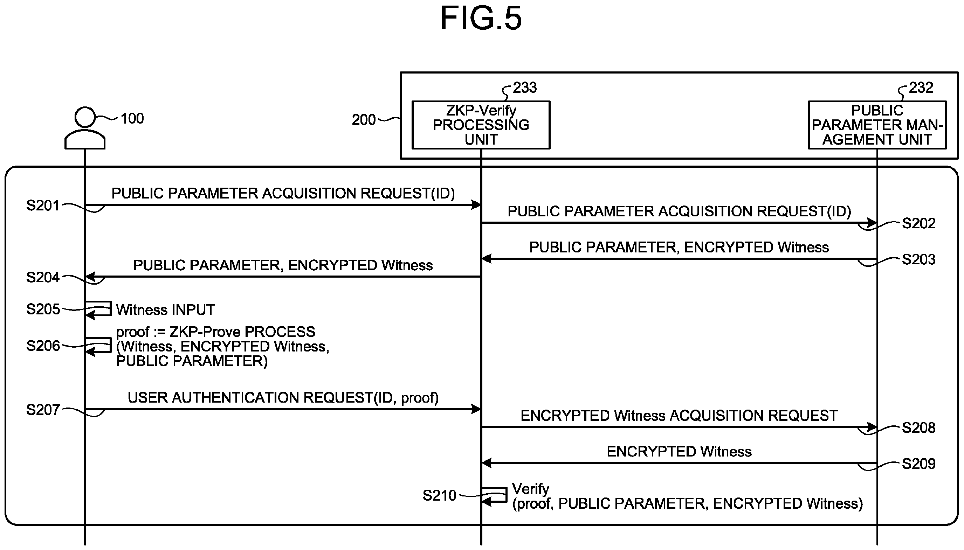

FIG. 5 is a diagram illustrating an example of a procedure of the user authentication process according to the embodiment. As illustrated in FIG. 5, the user terminal 100 transmits, to the cloud server 200, a request for acquiring a public parameter associated with the user ID input by the user in association with the user authentication (Step S201).

The ZKP-Verify processing unit 233 of the cloud server 200 requests the public parameter management unit 232 to provide the public parameter (Step S202).

The public parameter management unit 232 of the cloud server 200 provides the public parameter and encrypted Witness to the ZKP-Verify processing unit 233 in response to a request from the ZKP-Verify processing unit 233 (Step S203).

The ZKP-Verify processing unit 233 of the cloud server 200 transmits the public parameter and encrypted Witness to the user terminal 100 (Step S204).

The Witness input unit 173 of the user terminal 100 receives an input of Witness from the user in association with the user authentication (Step S205).

The ZKP-Prove processing unit 175 executes the ZKP-Prove process based on Witness, encrypted Witness, and the public parameter to generate a proof for user authentication by the zero knowledge proof (Step S206).

The ZKP-Prove processing unit 175 transmits a user authentication request based on the user ID input in Step S201 and the proof generated in Step S206 to the cloud server 200 (Step S207).

The ZKP-Verify processing unit 233 of the cloud server 200 requests the public parameter management unit 232 to provide encrypted Witness associated with the user ID included in the user authentication request received from the user terminal 100 (Step S208).

The public parameter management unit 232 of the cloud server 200 provides encrypted Witness to the ZKP-Verify processing unit 233 in response to a request from the ZKP-Verify processing unit 233 (Step S209).

The ZKP-Verify processing unit 233 of the cloud server 200 verifies the proof based on the proof included in the user authentication request and the public parameter and encrypted Witness associated with the user ID included in the user authentication request (Step S210).

### [3-3. Generation and storage of user secret key by identity verification]

### <3-3-1. Hashing>

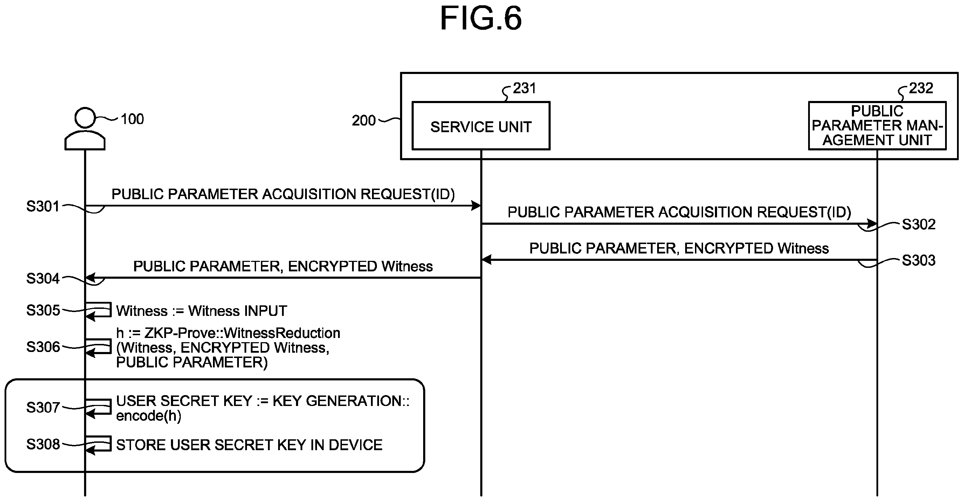

FIG. 6 is a diagram illustrating an example of a procedure of a process of generating and storing a user secret key according to the embodiment. In the procedure of the process illustrated in FIG. 6, the process of Steps S301 to S304 is basically similar to the process of Steps S201 to S204 illustrated in FIG. 5, and thus detailed description is omitted.

As illustrated in FIG. 6, the user terminal 100 requests the user to input Witness used for generating the identity proof algorithm in association with the identity verification (user authentication), and the Witness input unit 173 receives the input of Witness (Step S305).

The WitnessReduction processing unit 175a executes the WitnessReduction process based on Witness acquired in Step S305, encrypted Witness, and the public parameter to generate the polynomial h (Step S306).

The key generation unit 176 encodes and hashes the polynomial h generated by the WitnessReduction process to generate a user secret key (Step S307) to store the generated user secret key in the device (Step S308).

### <3-3-2. Random number>

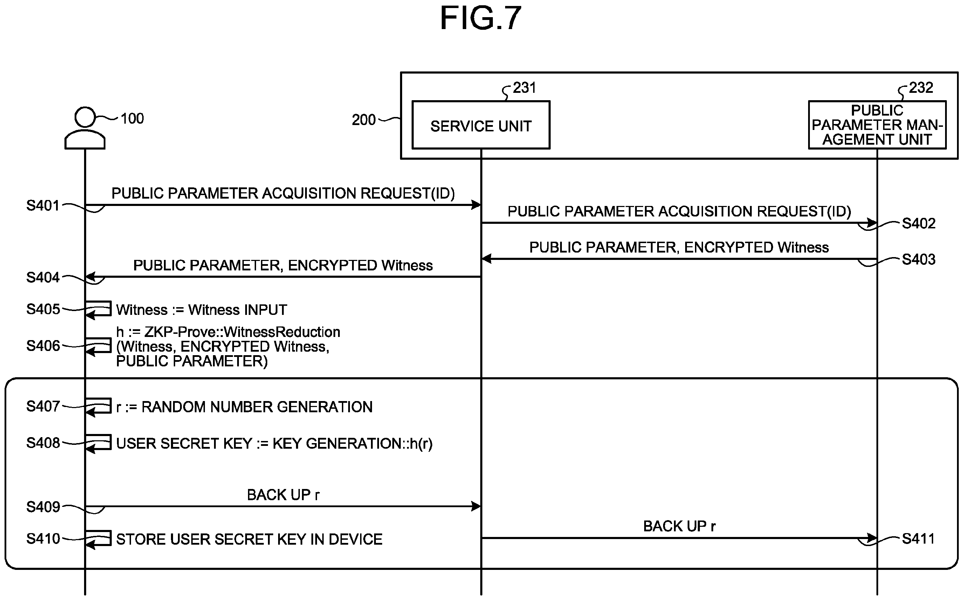

FIG. 7 is a diagram illustrating another example of a procedure of a process of generating and storing the user secret key according to the embodiment. In the procedure of the process illustrated in FIG. 7, the process of Steps S401 to S404 is basically similar to the process of Steps S201 to S204 illustrated in FIG. 5, and thus detailed description is omitted.

As illustrated in FIG. 7, the user terminal 100 requests the user to input Witness used for generating the identity proof algorithm in association with the identity verification (user authentication), and the Witness input unit 173 receives the input of Witness (Step S405).

The WitnessReduction processing unit 175a executes the WitnessReduction process based on Witness acquired in Step S405, encrypted Witness, and the public parameter to generate the polynomial h (Step S406).

The key generation unit 176 generates an arbitrary random number r (Step S407) to generate a value obtained by inputting the generated random number r to the polynomial h as the user secret key (Step S408).

The key generation unit 176 transmits a request for back up of the random number r generated in Step S407 to the cloud server 200 (Step S409), and stores the user secret key generated in Step S408 in the device (Step S410).

When receiving the request for back up of the random number r from the user terminal 100, the service unit 231 of the cloud server 200 requests the public parameter management unit 232 to back up the random number r (Step S411).

### (4. Modification)

### [4-1. Generation and management of a plurality of identity proof algorithms]

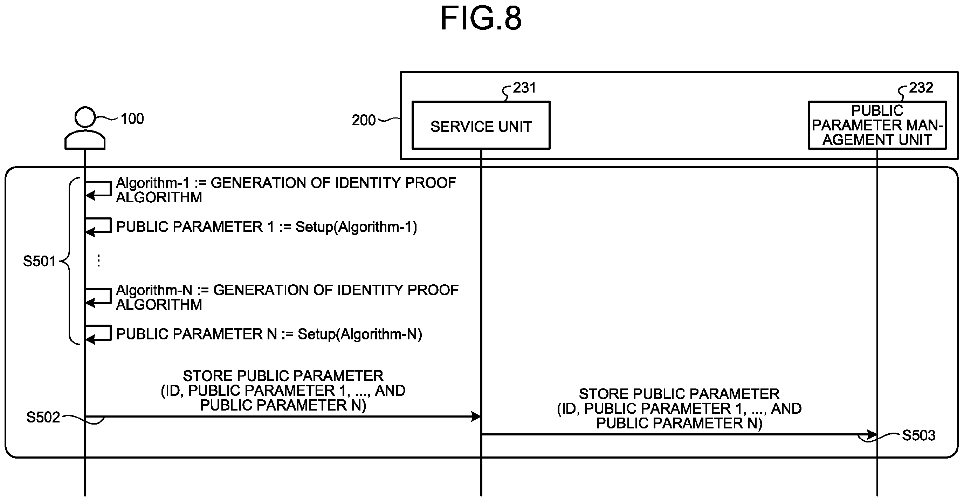

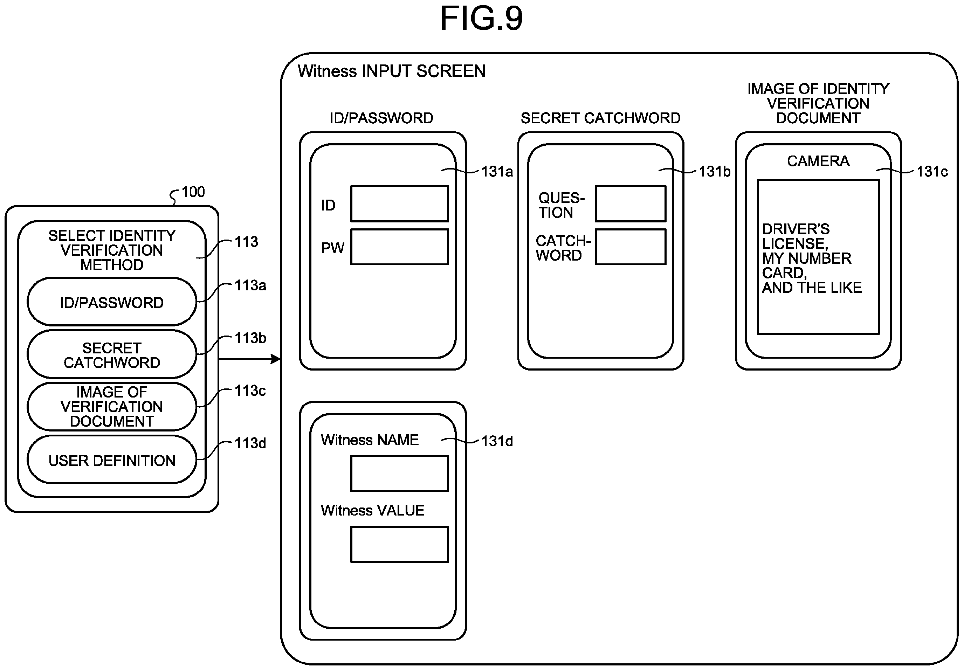

In the above embodiment, the user terminal 100 may generate a plurality of identity proof algorithms selected by the user, and register the public parameter corresponding to each of the plurality of identity proof algorithms in the cloud server 200. FIG. 8 is a diagram illustrating an example of a procedure of a process of storing a public parameter according to a modification. FIG. 9 is a diagram illustrating an example of a user interface for selecting an identity proof algorithm according to a modification.

As illustrated in FIG. 8, the identity proof algorithm generation unit 171 provides the user with the selection user interface 113 illustrated in FIG. 9 to generate the identity proof algorithm, and the ZKP-Setup processing unit 172 generates the public parameter (Step S501).

As illustrated in FIG. 9, the identity proof algorithm generation unit 171 displays, on the output unit 103, a selection user interface 113 from which a plurality of identity verification methods can be selected, and provides the user with the selection user interface 113. The selection user interface 113 illustrated in FIG. 9 includes a plurality of selection items 113a to 113d for selecting an identity verification method. The selection user interface 113 is configured to be capable of receiving selection of the selection items 113a to 113d from the user and displaying Witness input screens 131a to 131d corresponding to the selection items 113a to 113d, respectively. An identity proof algorithm generation unit 171 generates an identity proof algorithm each time an identity proof method is selected and Witness is input.

The ZKP-Setup processing unit 172 generates a public parameter based on an identity proof algorithm for each of a plurality of identity proof algorithms generated by the identity proof algorithm generation unit 171.

Returning to FIG. 8, the user registration unit 174 transmits a public parameter storage request to the cloud server 200 in association with the user ID and all the public parameters generated by the ZKP-Setup processing unit 172 (Step S502).

When receiving the storage request of the public parameter from the user terminal 100, the service unit 231 of the cloud server 200 requests the public parameter management unit 232 to store the public parameter (Step S503). The public parameter management unit 232 registers and manages the user ID and all the public parameters in association with each other.

### [4-2. Generation and storage of user secret key at the time of initial user registration]

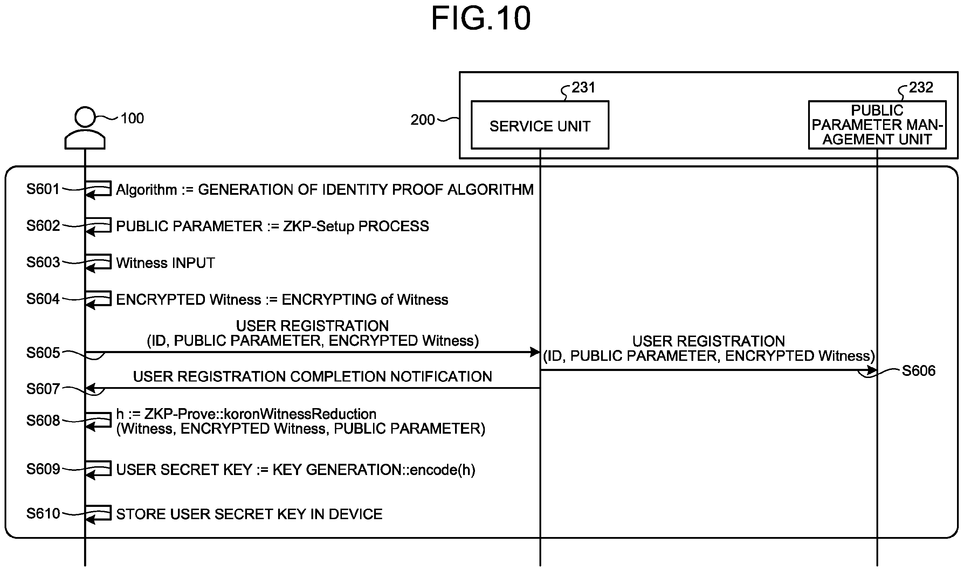

FIG. 10 is a diagram illustrating another example of a procedure of a process of generating and storing the user secret key according to the modification. FIG. 10 illustrates a procedure of generating and storing the user secret key at the time of initial user registration. In the procedure of the process illustrated in FIG. 10, the process of Steps S601 to S607 is similar to the process of Steps S101 to S107 illustrated in FIG. 4, and thus detailed description is omitted. In addition, in the procedure of the process illustrated in FIG. 10, the process of Steps S608 to S610 is basically similar to the process of Steps S306 to S308 illustrated in FIG. 6.

Upon receiving the user registration completion notification, the WitnessReduction processing unit 175a of the user terminal 100 generates the polynomial h based on Witness acquired in Step S603, encrypted Witness, and the public parameter (Step S608).

The key generation unit 176 encodes and hashes the polynomial h generated by the WitnessReduction process to generate a user secret key (Step S609) to store the generated user secret key in the device (Step S610).

In Step S609, as illustrated in FIG. 7, the user terminal 100 may generate an arbitrary random number r and generate a value obtained by inputting the generated random number r to the polynomial h as the user secret key.

### [4-3. Recovery of user secret key by public parameter]

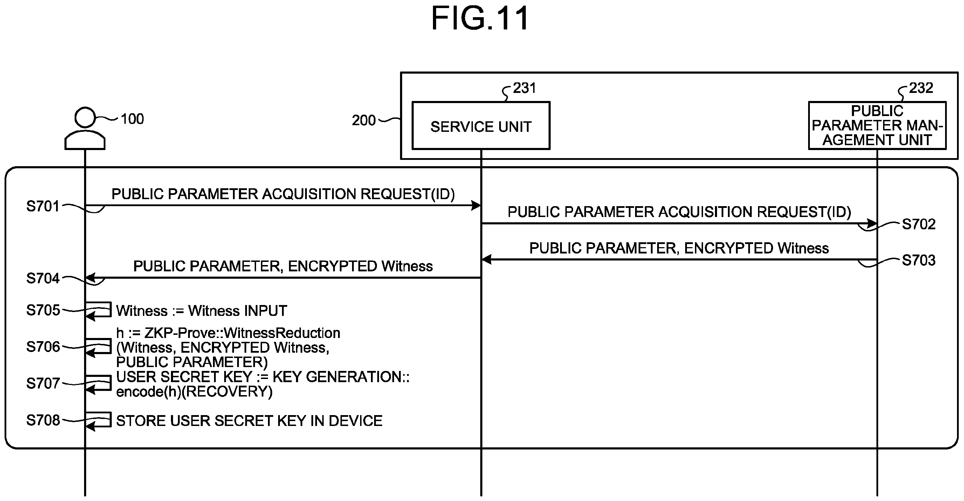

FIG. 11 is a diagram illustrating an example of a procedure of a process of recovering a user secret key by a public parameter according to a modification. Steps S701 to S708 illustrated in FIG. 11 are basically similar to Steps S301 to S308 illustrated in FIG. 6, and thus detailed description thereof is omitted. In a case where the user of the user terminal 100 self-manages the user secret key by device storage or the like, a situation in which the user secret key is lost may occur. At this time, the user terminal 100 requests the user to input Witness used for generating the identity proof algorithm (Step S705). Subsequently, the user terminal 100 executes the WitnessReduction process based on the public parameter and encrypted Witness acquired from the cloud server 200 and Witness acquired from the user to generate the polynomial h (Step S706). The user terminal 100 can recover the user secret key by generating the user secret key again using the polynomial h generated by the WitnessReduction process (Step S707).

### [4-4. Generation and storage of backup secret key]

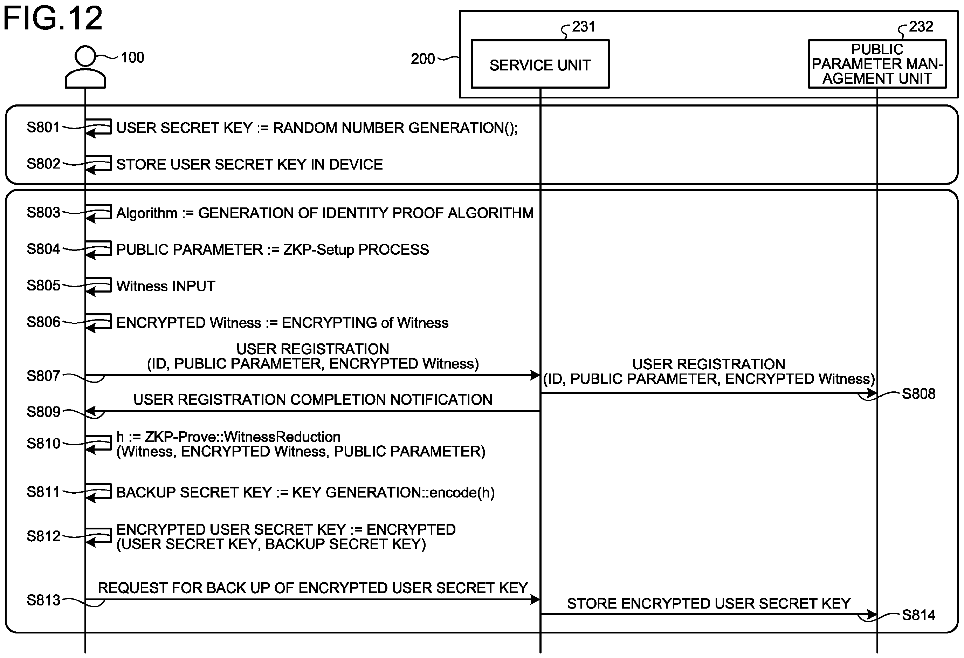

FIG. 12 is a diagram illustrating an example of a procedure of a process of generating and storing a backup secret key according to the modification. In the procedure of the process illustrated in FIG. 12, the process of Steps S803 to S810 is basically similar to the process of Steps S601 to S610 illustrated in FIG. 10, and thus detailed description is omitted.

As illustrated in FIG. 12, the user terminal 100 generates a user secret key based on the generated arbitrary random number (Step S801) to store the generated user secret key in the device (Step S802).

Subsequently, the user ID, the public parameter, and encrypted Witness are registered between the user terminal 100 and the cloud server 200 (Steps S803 to S809). Then, after the user registration is completed, the user terminal 100 generates the polynomial h (Step S810).

The key generation unit 176 generates a backup secret key for encrypting the user secret key generated in Step S801 based on the polynomial h generated in Step S810 (Step S811). For example, the key generation unit 176 encodes and hashes the polynomial h to generate the backup secret key.

The key generation unit 176 generates an encrypted user secret key obtained by encrypting the user secret key generated in Step S801 with the backup secret key generated in Step S811 (Step S812).

The key generation unit 176 transmits a request for back up of the encrypted user secret key generated in Step S812 to the cloud server 200 (Step S813).

When receiving the request for back up of the encrypted user secret key from the user terminal 100, the service unit 231 of the cloud server 200 requests the public parameter management unit 232 to back up the encrypted user secret key (Step S815). The public parameter management unit 232 registers and manages the encrypted user secret key in association with the user ID.

### [4-5. Recovery of user secret key by backup secret key]

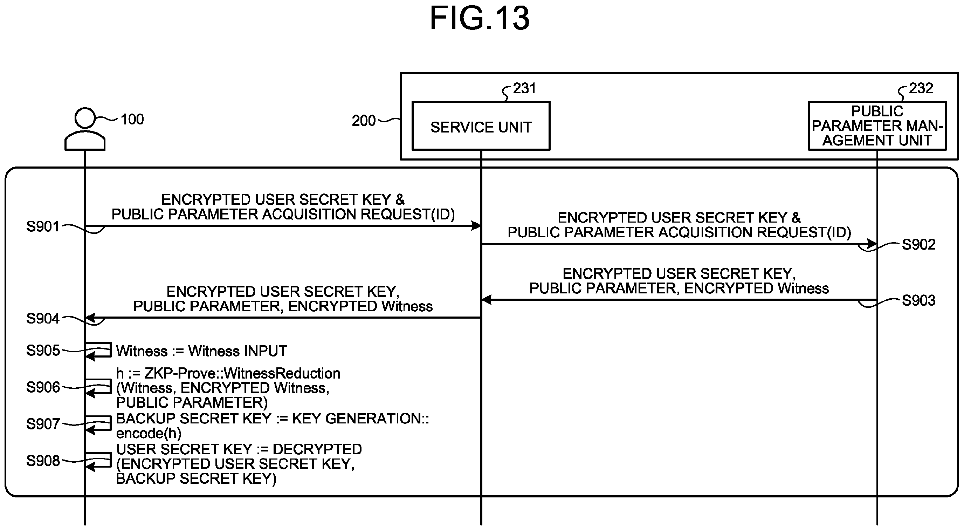

FIG. 13 is a diagram illustrating an example of a procedure of a process of recovering a user secret key by a backup secret key according to the modification.

As illustrated in FIG. 13, the user terminal 100 requests input of a user ID in response to a user's request for recovering a user secret key to transmit a request for acquiring an encrypted user secret key and a public parameter based on the input user ID to the cloud server 200 (Step S901).

Upon receiving an acquisition request from the user terminal 100 about the encrypted user secret key and the public parameter, the service unit 231 of the cloud server 200 requests the public parameter management unit 232 to provide the encrypted user secret key and the public parameter (Step S902).

The public parameter management unit 232 of the cloud server 200 provides the service unit 231 with the encrypted user secret key, the public parameter, and encrypted Witness in response to a request from the service unit 231.

The service unit 231 transmits the encrypted user secret key, the public parameter, and encrypted Witness to the user terminal 100 (Step S904).

Subsequently, the user terminal 100 requests input of Witness used for generation of the identity proof algorithm when the encrypted user secret key is backed up, and the Witness input unit 173 receives the input of Witness (Step S905).

The WitnessReduction processing unit 175a executes the WitnessReduction process based on Witness acquired in Step S905, encrypted Witness, and the public parameter to generate a polynomial h (Step S906).

The key generation unit 176 encodes and hashes the polynomial h generated by the WitnessReduction process to generate the backup secret key again (Step S907).

The key generation unit 176 decrypts the encrypted user secret key acquired from the cloud server 200 using the backup secret key regenerated in Step S907 to recover the user secret key (Step S908).

### (5. Others)

### [5-1. Application example of a plurality of identity proof algorithms]

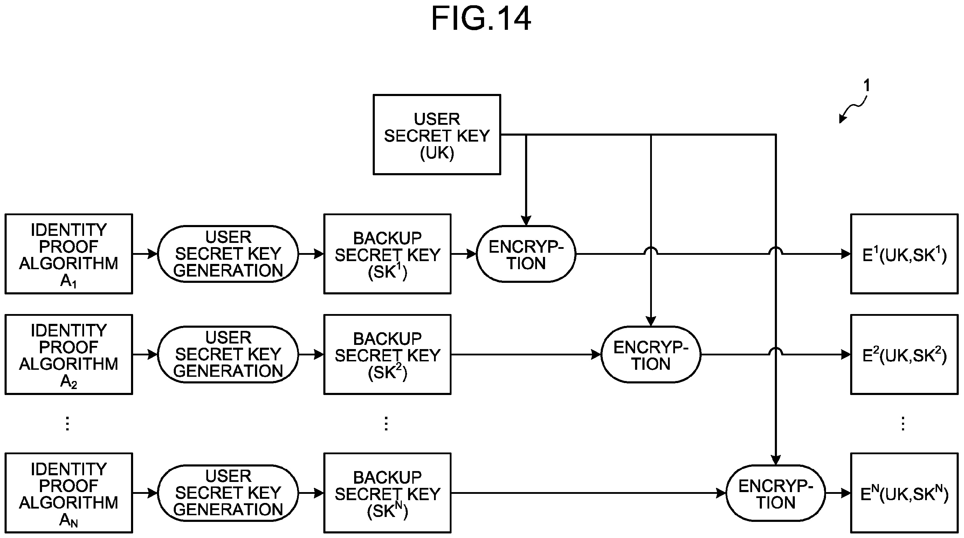

For example, when the encrypted user secret key illustrated in FIG. 13 is backed up, a plurality of identity proof algorithms can be applied. FIG. 14 is a diagram illustrating an application example of a plurality of identity proof algorithms. As illustrated in FIG. 14, for example, the user terminal 100 generates backup secret keys SK¹ to SKⁿ from a plurality of identity proof algorithms A₁ to Aₙ, respectively. That is, the backup secret key SK¹ is generated from the polynomial h based on the identity proof algorithm A₁, and the backup secret key SKⁿ is generated from the polynomial h based on the identity proof algorithm Aₙ. Subsequently, the user terminal 100 generates encrypted user secret keys E¹ to Eⁿ obtained by encrypting a user secret key UK using the backup secret keys SK¹ to SKⁿ, respectively, and backs up them in the cloud server 200, for example. The user of the user terminal 100 can acquire the encrypted user secret key from the backup destination when the user can perform identity verification with any one identity proof algorithm of the plurality of identity proof algorithms. Then, the user of the user terminal 100 can recover the user secret key by using the encrypted user secret key acquired from the backup destination.

### [5-2. Use case]

The user authentication method according to the above-described embodiment can be used for other than login to an online service such as a web service provided by the cloud server 200. For example, it can be used for identity verification at the time of entrance of a concert, an event, or the like, identity verification in various contracts, identity verification in various services such as a student discount, and the like. Furthermore, in conjunction with the process of various game applications, the user authentication according to the above-described embodiment can be used for a process related to the progress of the game, for example, acquisition of secret information that causes an event to occur or proving that the user has reached a secret place. For example, a specific location with a secret catchword written may be provided on the game field, and only users who have reached such the specific location can generate a proof (that can prove that they have reached the location).

Further, it is also possible to manually perform all or part of the processes described as being performed automatically of respective processes described in the above embodiment, or alternatively, it is also possible to automatically perform all or part of the processes described as being performed manually by a known method. In addition, the processing procedure, specific name, and information including various pieces of data and parameters illustrated in the above document and drawings can be arbitrarily changed unless otherwise specified. For example, the various pieces of information illustrated in each figure are not limited to the illustrated information.

Further, each component of each of the illustrated devices is a functional concept, and does not necessarily have to be physically configured as illustrated in the figure. That is, the specific form of distribution/integration of each device is not limited to the one illustrated in the figure, and all or part of the device can be functionally or physically distributed/integrated in any unit according to various loads and usage conditions. For example, the processing function of the ZKP-Prove processing unit 175 illustrated in FIG. 1 may be distributed from the user terminal 100 and implemented in a verification device provided outside the user terminal 100. In this case, when acquiring Witness from the user terminal 100, the verification device acquires the public parameter and the like from the cloud server 200, executes the user authentication process based on the acquired public parameter and the like to transmit a result of the user authentication result to the cloud server 200.

Further, the above-described embodiments and modifications can be appropriately combined in a range where the processing contents do not contradict each other.

Further, the effects in each embodiment described in the present specification are merely examples and are not limited, and other effects may be present. In addition, at least one of the effects described in the present disclosure may be obtained.

### (6. Effects)

As described above, an identity verification program according to the present disclosure causes a computer, which is a user terminal (the user terminal 100 or the like in the embodiment), to execute a processing function for identity verification by zero knowledge proof. Such an identity verification program acquires Witness that is information that only the user of the user terminal is allowed to know. Such an identity verification program generates a proof for user authentication by zero knowledge proof based on the acquired Witness. The identity verification program transmits a user authentication request based on the generated proof to the authentication device (the cloud server 200 or the like in the embodiment). As a result, the identity verification program according to the present disclosure can cause the authentication device to execute the user authentication process in which information that only the user is allowed to know is not disclosed. Therefore, the identity verification program according to the present disclosure can realize protection of user privacy in user authentication when using an online service, for example.

In addition, the identity verification program according to the present disclosure executes a setup process of generating a public parameter for user authentication by zero knowledge proof based on an identity proof algorithm for identity verification. Such an identity verification program registers, in the authentication device, user identification information unique to the user of the user terminal, a public parameter, and encrypted Witness in association with each other. Such an identity verification program uses Witness, the public parameter, and encrypted Witness obtained by encrypting Witness to generate a polynomial that is configured to be derived in polynomial time on condition that Witness is correct. Such an identity verification program generates a proof using the polynomial. The identity verification program transmits a user authentication request based on the user identification information and the proof to the authentication device. As a result, the identity verification program according to the present disclosure can register the public parameter based on the identity proof algorithm in the authentication device in advance, and cause the user terminal to execute, based on the public parameter, the user authentication process in which information that only the user is allowed to know is not disclosed. Therefore, according to the identity verification program according to the present disclosure, for example, it is possible to realize protection of user privacy in user authentication when using an online service.

Further, an identity verification program according to the present disclosure generates a user secret key for encrypting user data of the user by using a polynomial. As a result, the identity verification program according to the present disclosure can securely encrypt the user data with the user secret key that cannot be generated unless the identity verification succeeds based on the information that only the user is allowed to know. Therefore, according to the identity verification program according to the present disclosure, even when data obtained by encrypting the user data with the user secret key is uploaded onto the online service, there is no concern that the user data is decrypted, and user privacy in use of the online service can be protected.

Further, an identity verification program according to the present disclosure generates a backup secret key for encrypting a user secret key by using a polynomial, generates an encrypted user secret key obtained by encrypting the user secret key by using the backup secret key, and registers the encrypted user secret key in an authentication device. As a result, the identity verification program according to the present disclosure can realize secure backup of the user secret key obtained by encrypting the user data with the backup secret key generated on condition that the identity verification is successful. That is, the identity verification program according to the present disclosure backs up an encrypted user secret key obtained by encrypting the user secret key with the backup secret key that cannot be generated unless identity verification succeeds. Therefore, according to the identity verification program according to the present disclosure, there is no concern that the encrypted user secret key is decrypted. Furthermore, according to the identity verification program according to the present disclosure, even when the user secret key is lost, the user secret key can be restored by decrypting the encrypted user secret key backed up on the online service using the backup secret key. Therefore, according to the identity verification program according to the present disclosure, data availability can be enhanced, and user convenience in safe backup of user data can be improved.

Furthermore, the identity verification program according to the present disclosure provides an interface for receiving selection of an identity proof algorithm from a user of the user terminal. As a result, the identity verification program according to the present disclosure can cause the user terminal to execute the user authentication process using the identity proof algorithm selected by the user. As a result, according to the identity verification program according to the present disclosure, instead of the identity proof algorithm set by the service operator providing the online service an identity proof algorithm desired by the user can be used. Therefore, according to the identity verification program according to the present disclosure, for example, it is possible to improve the convenience of the user in the user authentication when using the online service while protecting the user privacy in the user authentication when using the online service or the like.

### (7. Hardware configuration)

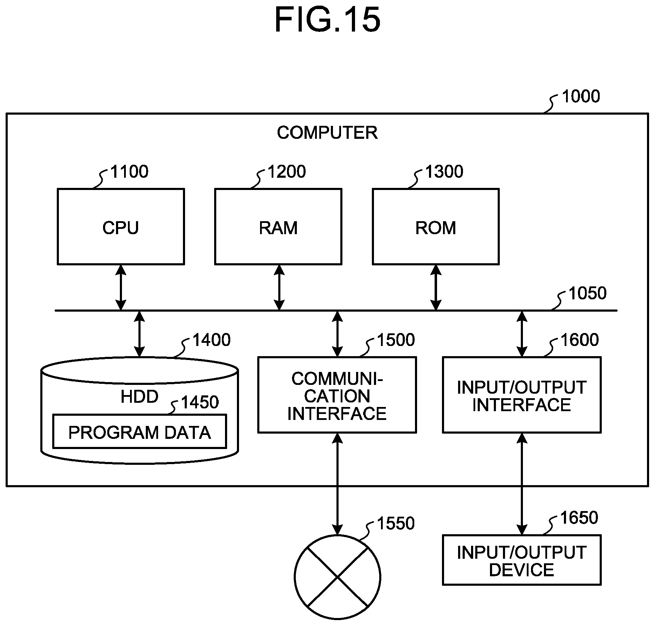

The user terminal 100 according to each embodiment described above is realized by a computer 1000 having a configuration as illustrated in FIG. 15, for example. FIG. 15 is a hardware configuration diagram illustrating an example of the computer 1000 that implements the functions of the user terminal 100. The computer 1000 includes a CPU 1100, a RAM 1200, a read only memory (ROM) 1300, a hard disk drive (HDD) 1400, a communication interface 1500, and an input/output interface 1600. Respective units of the computer 1000 are connected by a bus 1050.

The CPU 1100 operates based on a program stored in the ROM 1300 or the HDD 1400, and controls each unit. For example, the CPU 1100 develops a program stored in the ROM 1300 or the HDD 1400 in the RAM 1200, and executes processes corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer 1000-readable recording medium that non-transiently records programs executed by the CPU 1100, data used by the programs, and the like. Specifically, the HDD 1400 is a recording medium that records a program for implementing the antenna switching process illustrated in FIG. 3, for example.

The communication interface 1500 is an interface for the computer 1000 to be connected to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the user terminal 100 according to the embodiment, the CPU 1100 of the computer 1000 executes a program (such as a program for realizing antenna switching process) loaded on the RAM 1200. As a result, functions such as various processes executed by the control unit 117 of the user terminal 100 are realized. In addition, the HDD 1400 stores a program (an example of an identity verification program) for realizing a process of the user terminal 100 according to the present disclosure, data stored in the storage unit 111, and the like. The CPU 1100 reads the program data 1450 from the HDD 1400 and executes the program data, but as another example, the program may be acquired from another device via the external network 1550.

The present technology may also be configured as below.
(1) An identity verification program causing a computer, as a user terminal, to execute a processing function for identity verification by zero knowledge proof, the identity verification program comprising:
   acquiring Witness that is information that only a user of the user terminal is allowed to know;
   generating a proof for user authentication by zero knowledge proof based on the acquired Witness; and
   transmitting a user authentication request based on the generated proof to an authentication device.
(2) The identity verification program according to (1), the program comprising:
   executing a setup process of generating a public parameter for user authentication by the zero knowledge proof based on an identity proof algorithm for the identity verification;
   registering, in the authentication device, user identification information unique to a user of the user terminal, the public parameter, and encrypted Witness obtained by encrypting the Witness in association with each other;
   generating a polynomial that is configured to be derived in polynomial time on condition that the Witness is correct using the Witness, the public parameter, and the encrypted Witness;
   generating the proof using the polynomial; and
   transmitting a user authentication request based on the user identification information and the proof to an authentication device.
(3) The identity verification program according to (2), the program comprising generating a user secret key for encrypting user data of the user using the polynomial.
(4) The identity verification program according to (3), the program comprising:
   generating a backup secret key for encrypting the user secret key using the polynomial;
   generating an encrypted user secret key obtained by encrypting the user secret key using the backup secret key; and
   registering the encrypted user secret key in the authentication device.
(5) The identity verification program according to any one of (2) to (4), the program comprising
   providing an interface for receiving selection of the identity proof algorithm from a user of the user terminal.
(6) An identity verification method, the method, by a computer, as a user terminal, that executing a processing function for identity verification by zero knowledge proof, comprising:
   acquiring Witness that is information that only a user of the user terminal is allowed to know;
   generating a proof for user authentication by zero knowledge proof based on the acquired Witness; and
   transmitting a user authentication request using the generated proof to an authentication device.
(7) A user terminal that executes a processing function for identity verification by zero knowledge proof, the user terminal comprising:
   an acquisition unit that acquires Witness that is information that only a user of the user terminal is allowed to know;
   a generation unit that generates a proof for user authentication by zero knowledge proof based on the Witness; and
   a transmission unit that transmits a user authentication request using the proof to an authentication device.
(8) A user authentication program causing a computer to execute a processing function of user authentication by zero knowledge proof, the user authentication program comprising:
   receiving a user authentication request from a user terminal; and
   executing user authentication based on a proof for user authentication by zero knowledge proof generated based on Witness that is information that only a user of the user terminal is allowed to know, the information being included in the user authentication request, and encrypted Witness that is information registered in advance in association with user identification information included in the user authentication request, the encrypted Witness being obtained by encrypting the Witness.

### Reference Signs List

- 1: INFORMATION PROCESSING SYSTEM

- 10: COMMUNICATION NETWORK
- 100: USER TERMINAL
- 101: COMMUNICATION UNIT
- 102: INPUT UNIT
- 103: OUTPUT UNIT
- 104: IMAGING UNIT
- 105: POSITIONING UNIT
- 106: DETECTION UNIT
- 115: STORAGE UNIT
- 117: CONTROL UNIT
- 171: IDENTITY PROOF ALGORITHM GENERATION UNIT
- 172: ZKP-Setup PROCESSING UNIT
- 173: Witness INPUT UNIT
- 174: USER REGISTRATION UNIT
- 175: ZKP-Prove PROCESSING UNIT
- 175a: WitnessReduction PROCESSING UNIT
- 175b: Proof GENERATION UNIT
- 176: KEY GENERATION UNIT
- 200: CLOUD SERVER
- 201: COMMUNICATION UNIT
- 202: STORAGE UNIT
- 203: CONTROL UNIT
- 231: SERVICE UNIT
- 232: PUBLIC PARAMETER MANAGEMENT UNIT
- 233: ZKP-Verify PROCESSING UNIT

## Claims

1. An identity verification program causing a computer, as a user terminal, to execute a processing function for identity verification by zero knowledge proof, the identity verification program comprising:
acquiring Witness that is information that only a user of the user terminal is allowed to know;
generating a proof for user authentication by zero knowledge proof based on the acquired Witness; and
transmitting a user authentication request based on the generated proof to an authentication device.

2. The identity verification program according to claim 1, the program comprising:
executing a setup process of generating a public parameter for user authentication by the zero knowledge proof based on an identity proof algorithm for the identity verification;
registering, in the authentication device, user identification information unique to a user of the user terminal, the public parameter, and encrypted Witness obtained by encrypting the Witness in association with each other;
generating a polynomial that is configured to be derived in polynomial time on condition that the Witness is correct using the Witness, the public parameter, and the encrypted Witness;
generating the proof using the polynomial; and
transmitting a user authentication request based on the user identification information and the proof to an authentication device.

3. The identity verification program according to claim 2, the program comprising generating a user secret key for encrypting user data of the user using the polynomial.

4. The identity verification program according to claim 3, the program comprising:
generating a backup secret key for encrypting the user secret key using the polynomial;
generating an encrypted user secret key obtained by encrypting the user secret key using the backup secret key; and
registering the encrypted user secret key in the authentication device.

5. The identity verification program according to claim 2, the program comprising
providing an interface for receiving selection of the identity proof algorithm from a user of the user terminal.

6. An identity verification method, the method, by a computer, as a user terminal, that executing a processing function for identity verification by zero knowledge proof, comprising:
acquiring Witness that is information that only a user of the user terminal is allowed to know;
generating a proof for user authentication by zero knowledge proof based on the acquired Witness; and
transmitting a user authentication request using the generated proof to an authentication device.

7. A user terminal that executes a processing function for identity verification by zero knowledge proof, the user terminal comprising:
an acquisition unit that acquires Witness that is information that only a user of the user terminal is allowed to know;
a generation unit that generates a proof for user authentication by zero knowledge proof based on the Witness; and
a transmission unit that transmits a user authentication request using the proof to an authentication device.

8. A user authentication program causing a computer to execute a processing function of user authentication by zero knowledge proof, the user authentication program comprising:
receiving a user authentication request from a user terminal; and
executing user authentication based on a proof for user authentication by zero knowledge proof generated based on Witness that is information that only a user of the user terminal is allowed to know, the information being included in the user authentication request, and encrypted Witness that is information registered in advance in association with user identification information included in the user authentication request, the encrypted Witness being obtained by encrypting the Witness.
